# EUROPÄISCHE PATENTSCHRIFT

(11) **EP 3 283 255 B1**
(45) Veröffentlichungstag und Bekanntmachung des Hinweises auf die Patenterteilung: **08.05.2019**
(21) Anmeldenummer: 16713315.6
(22) Anmeldetag: 15.03.2016
(51) Int. Cl.: B23P 19/04, B25B 11/02, F01L 1/047

(54) **VERFAHREN ZUM POSITIONIEREN EINES NOCKENWELLENELEMENTES AUF EINEM WELLENSEGMENT EINER NOCKENWELLE**
METHOD FOR POSITIONING A CAMSHAFT ELEMENT ON A SHAFT SEGMENT OF A CAMSHAFT
PROCÉDÉ SERVANT À POSITIONNER UN ÉLÉMENT D'ARBRE À CAMES SUR UN SEGMENT D'ARBRE D'UN ARBRE À CAMES

(30) Priorität: 17.04.2015 DE 102015206967
(43) Veröffentlichungstag der Anmeldung: 21.02.2018
(73) Patentinhaber: ThyssenKrupp Presta TecCenter AG, 9492 Eschen (LI); thyssenkrupp AG, 45143 Essen (DE)
(72) Erfinder: SCHERZINGER, Guido, CH-9468 Sax (CH)
(74) Vertreter: thyssenkrupp Intellectual Property GmbH
(86) Internationale Anmeldenummer: PCT/EP2016/055529
(87) Internationale Veröffentlichungsnummer: WO 2016/165895

(56) Entgegenhaltungen:
- WO-A1-2011/069591
- WO-A1-2011/076330
- DE-A1- 2 838 995
- JP-A- 2012 213 817

## Beschreibung

Die vorliegende Erfindung betrifft ein Verfahren zum Positionieren wenigstens eines Nockenelementes auf einem Wellensegment einer Nockenwelle mittels eines Montagehilfselementes.

Grundlegend ist es bekannt, dass Nockenwellen den Gaswechsel und damit die Verbrennung eines Verbrennungsmotors eines Kraftfahrzeuges steuern. Sie werden von der Kurbelwelle angetrieben. Ihre Drehbewegung steht folglich in einem genau definierten Verhältnis zur Drehbewegung der Kurbelwelle und damit zur Position der Kolben in den Zylindern. Des Weiteren ist grundlegend bekannt, dass Nockenwellen, insbesondere gebaute Nockenwellen, unterschiedlichste Komponenten, wie beispielsweise ein Wellenrohr sowie die Nocken und weitere Funktionselemente aufweisen, die separat gefertigt und anschließend zusammenmontiert werden. Hierdurch ist eine Gewichtseinsparung von bis zu 40 Prozent gegenüber von aus nur einem Material hergestellten Nockenwellen möglich. Eine derartig verringerte zu bewegende Masse führt folglich zu einem optimierten Schwingungsverhalten und zu einem niedrigen Kraftstoffverbrauch des Verbrennungsmotors.

Grundsätzlich ist eine Mehrzahl von Fügeverfahren für die Herstellung gebauter Nockenwellen bekannt. Diese unterscheiden sich in der Art der Verbindung. So gibt es beispielsweise die stoffschlüssige Befestigung der Funktionsteile durch Auflöten, Schweißen oder Aufsintern, oder auch die unmittelbare reibschlüssige Befestigung, wie mittels eines zylindrischen Pressverbandes befestigte Nocken. Es ist ebenfalls denkbar, dass die Nocken mittelbar über konische Zwischenelemente reibschlüssig auf der Trägerwelle befestigt werden oder dass diese unmittelbar formschlüssig mittels einer Keilwellenverbindung auf die Trägerwelle aufgebracht sind. Des Weiteren sind mittelbar formschlüssig mit Hilfe einer Passfeder befestigten Nockenelement ebenso bekannt, wie eine stoffschlüssige Verbindung von Nockenwellensegmenten mit Nocken. Bei der Montage der Nockenwelle stellt insbesondere die richtige Positionierung der Nockenelemente auf dem Wellensegment der Nockenwelle eine Herausforderung im Montageprozess dar. In Berücksichtigung der Kundenforderungen hinsichtlich geringer (Lage-)Toleranzen ist es erforderlich eine exakte Positionierung der einzelnen Nockenelemente auf dem Wellensegment zu realisieren. Bedingt durch Toleranzabweichungen des Wellensegmentes selbst sowie auch der einzelnen Nockenelemente hinsichtlich deren geometrischer Dimensionen, birgt das Montageverfahren beim Anordnen eines Nockenelementes auf dem Wellensegment die Gefahr, die definierten Kundenforderungen nicht einhalten zu können. Grundlegend ist es bekannt, dass beim Montageverfahren des Nockenelementes auf dem Wellensegment ein Werkzeug verwendet wird, welches ausgehend von einem distalen Ende bzw. einer Stirnfläche des Wellensegmentes das Nockenelement entlang der Wellensegmentlängsachse auf das Wellensegment aufschiebt. Bei zu großer geometrischer Dimensionierung des Wellensegmentes hinsichtlich dessen Wellensegmentlänge in Kombination mit entsprechend breiten oder schmalen Nocken, ist es denkbar, dass insbesondere die vom Kunden vorgegebenen Lagetoleranzen zwischen den einzelnen auf dem Wellensegment angeordneten Nocken mittels des bekannten Montageverfahrens nicht eingehalten werden können.

JP2012213817A und DE2838995A1 offenbaren Verfahren zum Positionieren eines Nockens auf einer Nockenwelle.

Es ist daher die Aufgabe der vorliegenden Erfindung, die voranstehend beschriebenen Nachteile bei einem Verfahren zum Positionieren wenigstens eines Nockenelementes zumindest teilweise zu beheben. Insbesondere ist es die Aufgabe der vorliegenden Erfindung ein Verfahren zum Positionieren wenigstens eines Nockenelementes auf einem Wellensegment einer Nockenwelle zu schaffen, welches auf eine einfache und kostengünstige Art und Weise eine Anordnung eines Nockenelementes auf dem Wellensegment unter Einbehaltung der strikten Kundenvorgaben hinsichtlich der Lagetoleranzen ermöglicht.

Die voranstehende Aufgabe wird gelöst durch ein Verfahren zum Positionieren wenigstens eines Nockenelementes auf einem Wellensegment einer Nockenwelle mittels eines Montagehilfselementes mit den Merkmalen gemäß Anspruch 1. Weitere Merkmale und Details zur Erfindung ergeben sich aus den Unteransprüchen, der Beschreibung und den Zeichnungen.

Das erfindungsgemäße Verfahren zum Positionieren wenigstens eines Nockenelementes auf einem Wellensegment einer Nockenwelle mittels eines Montagehilfselementes weist zumindest die folgenden Schritte auf:
- Anordnen des Wellensegmentes derart relativ zu einem ersten Werkzeug, das ein erstes distales Wellensegmentende des Wellensegmentes bündig an einer dem Wellensegment zugerichteten Werkzeugoberfläche des Werkzeuges anliegt,
- Anordnen des Nockenelementes auf dem Wellensegment in einer Vorposition,
- Anordnen des Montagehilfselementes, wobei ein erstes distales Ende des Montagehilfselementes die dem Wellensegment zugerichtete Werkzeugoberfläche des ersten Werkzeuges derart kontaktiert, dass das Montagehilfselement längs einer Wellensegmentlängsachse einen definierten Abstand zum ersten Werkzeug bildet, und
- Bewegen eines zweiten Werkzeuges zumindest abschnittsweise entlang der Wellensegmentlängsachse soweit bis das zweite Werkzeug ein zweites distales Ende des Montagehilfselementes kontaktiert, und Verschieben des Nockenelementes mittels des zweiten Werkzeuges von der Vorposition auf eine Endposition. Das Wellensegment selbst ist vorteilhaft als Vollwelle oder auch als Hohlwelle ausgestaltet. Bei Vorliegen einer Hohlwelle weist diese eine Durchgangsbohrung auf. Folglich ist es denkbar, dass das Wellensegment aus zwei Wellenkörpern, sprich einer Hohlwelle und einer sich durch die Durchgangsbohrung der Hohlwelle koaxial zur Hohlwelle erstreckenden Vollwelle besteht. Die Hohlwelle selbst bildet dann die Außenwelle, während die Vollwelle die Innenwelle des Wellensegmentes bildet. Bei Vorliegen von wenigstens zwei Wellenkörpern, die gemeinsam ein Wellensegment bilden, ist es denkbar, dass die Innenwelle relativ zur Außenwelle verdrehbar gestaltet ist. Hierbei ist es zudem denkbar, dass zumindest ein Nockenelement verdrehfest mit der Außenwelle verbunden ist, während ein zweites Nockenelement verdrehtfest mit der Innenwelle und vorteilhaft auf der Außenwelle gelagert ist. Demzufolge ist es möglich, dass bei einer Verdrehung der Innenwelle relativ zur Außenwelle auch der eine Nocken relativ zu dem anderen Nocken verdreht werden kann. Vorteilhaft ist das auf das Wellensegment aufzubringende Nockenelement ein Schiebenockenelement, welches ein Bestandteil einer schaltbaren Nockenwelle ist.

Bei dem erfindungsgemäßen Verfahren ist es vorteilhaft, wenn das Wellensegment derart an dem ersten Werkzeug angeordnet wird, dass dessen distales Wellensegmentende, welches im Rahmen der Erfindung auch als Stirnfläche des Wellensegmentes bzw. eines Wellenkörpers des Wellensegmentes verstanden wird, an einer Werkzeugoberfläche des Werkzeuges anliegt, welche dem Wellensegment zugerichtet ist. Folglich begrenzt diese Werkzeugoberfläche die Stirnseite des Wellensegmentes und liegt folglich bündig an der Stirnseite des Wellensegmentes an. Nach dem Anordnen des Wellensegmentes relativ zum ersten Werkzeug, wobei es auch denkbar ist, dass das erste Werkzeug relativ zum Wellensegment angeordnet wird, erfolgt eine Anordnung eines Nockenelementes auf dem Wellensegment zumindest in einer ersten Position, nämlich der Vorposition.

Es ist jedoch auch denkbar, dass der Schritt des Anordnens des Nockenelementes auf dem Wellensegment erst nach dem Anordnen des Montagehilfselementes, wie im Nachfolgenden beschrieben, erfolgt. Unter einem Anordnen des Nockenelementes wird im Rahmen der Erfindung vorteilhaft ein Aufschieben des Nockenelementes auf dem Wellensegment verstanden. Hierfür weist das Nockenelement zumindest eine Durchgangsbohrung auf, durch welche sich bei einem Aufschieben des Nockenelementes auf das Wellensegment das Wellensegment hindurch erstreckt. Das Nockenelement selbst weist vorteilhaft mindestens eine Nockenbahn bzw. eine Nockenkurve und besonders vorteilhaft mehrere Nockenbahnen bzw. Nockenkurven zur Variation der Steuerzeiten der Ventile des Verbrennungsmotors auf. Es ist zudem auch denkbar, dass das Nockenelement wenigstens einen Führungsabschnitt mit einer Führungsnut zum ermöglichen eines Einführens eines Aktuatorpins zur Verstellung des Nockenelementes innerhalb eines definierten Abschnittes des Wellensegmentes entlang der Wellensegmentlängsachse aufweist. Das Montagehilfselement wird derart angeordnet, dass ein distales Ende des Montagehilfselementes diejenige Werkzeugoberfläche des Werkzeuges kontaktiert, welche dem Wellensegment zugerichtet ist. Das bedeutet, dass das Montagehilfselement bündig an der Werkzeugoberfläche des Werkzeuges anliegt, insbesondere bündig mit dem Wellensegment ausgerichtet ist.

In einem zeitlich nachfolgenden Schritt wird ein zweites Werkzeug zumindest abschnittsweise entlang der Wellensegmentlängsachse bewegt. Aufgrund der Bewegung des zweiten Werkzeuges in Richtung des ersten Werkzeuges, ausgehend von einem zweiten distalen Ende des Wellensegmentes, welches dem ersten distalen Ende des Wellensegmentes gegenüber liegt, wird das vorpositionierte Nockenelement in Richtung des ersten Werkzeuges verschoben. Die Verschiebung des Nockenelementes findet folglich ebenfalls entlang der Wellensegmentlängsachse statt. Das Nockenelement wird demnach vorteilhaft von der Vorposition auf eine Endposition verschoben. Die Endposition des Nockenelementes ist durch die geometrisch in Wellensegmentlängsachsenrichtung betrachtete Dimensionierung des Montagehilfselementes bestimmt. Das bedeutet, dass das zweite Werkzeug nur soweit entlang der Wellensegmentlängsachse des Wellensegmentes bewegt werden kann, bis dieses mit dem positionierten Montagehilfselement anschlägt. Das Montagehilfselement stellt folglich ein Anschlagselement für das zweite Werkzeug dar.

Im Rahmen der Erfindung ist es denkbar, dass als Montagehilfselement eine Montagehülse verwendet wird. Die Montagehülse ist vorteilhaft rohrförmig ausgestaltet. Demzufolge wird die Montagehülse derart angeordnet, dass das Wellensegment sich durch eine Durchgangsbohrung der Montagehülse hindurch erstreckt. Die Montagehülse umschließt folglich das Wellensegment zumindest abschnittsweise. Dabei ist es denkbar, dass die Montagehülse eine in Umfangsrichtung betrachtet vollständig geschlossene Hülse ist, oder auch eine Montagehülse darstellt, welche in ihrer Umfangswandung eine Dehnungsnut bzw. einen Dehnungsschlitz aufweist.

Im Rahmen der Erfindung ist es des Weiteren denkbar, dass als Montagehilfselement ein Montagedorn verwendet wird. Vorteilhaft weist der Montagedorn eine stiftförmige Gestalt auf. Bei einem Anordnen des Montagehilfselementes wird folglich der Montagedorn durch die Durchgangsbohrung des Wellensegmentes hindurch geführt und erstreckt sich demzufolge zumindest abschnittsweise, vorteilhaft vollständig entlang der Durchgangsbohrung durch das Wellensegment hindurch. Die Ausgestaltung des Montagehilfselementes in Form einer Montagehülse oder auch eines Montagedorns ist kostengünstig zu realisieren. Des Weiteren ist es denkbar, dass die einfache geometrische Ausgestaltung des Montagehilfselementes in Gestalt eines Montagedorns oder auch einer Montagehülse zu einer eindeutigen Bestimmbarkeit der geometrischen Länge des Montagehilfselementes führt, wodurch auch die definierte Anordnung des Nockenelementes auf dem Wellensegment ermöglicht werden kann.

Es ist des Weiteren denkbar, dass mittels des ersten Werkzeuges das Wellensegment in einer Bearbeitungsposition ausgerichtet wird. Das bedeutet, dass die Wellensegmentlängsachse und folglich auch die Wellensegmentwandung bzw. die Wellensegmentumfangswandung sich im Wesentlichen im rechten Winkel, das bedeutet orthogonal ausgehend von der Wandung des ersten Werkzeuges weg erstreckt. Hierbei ist insbesondere die Wandung des Werkzeuges gemeint, welche dem Wellensegment zugewandt bzw. zugerichtet ist. Vorteilhaft dient das erste Werkzeug dazu, das Wellensegment in der Bearbeitungsposition, zumindest während des Montageprozesses des wenigstens einen Nockenelementes, zu arretieren, sodass eine ungewollte Bewegung und insbesondere ein Verrutschen des Wellensegmentes aus einer vordefinierten Position vermieden wird. Dies führt vorteilhaft zu einer exakt bestimmbaren Positionierung des Nockenelementes auf dem Wellensegment.

Es ist des Weiteren möglich, dass als erstes Werkzeug ein Spannfutter, insbesondere ein Maschinenfutter einer Montageanlage verwendet wird. Vorteilhaft dient ein Spannfutter dazu, das Wellensegment verdreh- und bewegungsfest einzuspannen.

Es ist des Weiteren möglich, dass das erste Werkzeug einen Innenspanndorn aufweist, mittels welchem das erste Werkzeug das Wellensegment in einer definierten Position arretiert. Der Innenspanndorn erstreckt sich dabei vorteilhaft zumindest abschnittsweise in die Durchgangsbohrung des Wellensegmentes hinein. Vorteilhaft dient der Innenspanndorn dazu, das Wellensegment in einer vorbestimmten Position zu arretieren und demzufolge das Wellensegment für den Montageprozess des Nockenelementes auf dem Wellensegment auszurichten, ohne dass der Anschlagsbereich des ersten Werkzeuges für das Montagehilfselement begrenzt ist. Der Anschlagsbereich des ersten Werkzeuges ist vorteilhaft die dem Wellensegment zugerichtete Wandung, welche das Montagehilfselement kontaktiert.

Es ist des Weiteren möglich, dass als zweites Werkzeug ein Greifelement, insbesondere ein Montagegreifer verwendet wird. Ein Greifelement dient zum einfachen Aufnehmen des Nockenelementes sowie zum einfachen und kostengünstig gestaltbaren Aufschieben des Nockenelementes auf dem Wellensegment.

Im Rahmen der Erfindung ist es des Weiteren denkbar, dass das Nockenelement mittels des Montagegreifers an dem Wellensegment angeordnet wird, wobei die Position des Nockenelementes innerhalb des Montagegreifers über wenigstens einen an einer axialen Seitenfläche des Nockenelementes ausgebildeten Vorsprung festgelegt wird. Vorteilhaft weist das Nockenelement mehr als einen Vorsprung insbesondere zwei oder drei Vorsprünge auf, welche sich vorteilhaft gleichmäßig zueinander beabstandet auf der Seitenfläche des Nockenelementes verteilen. Die Ausgestaltung eines Nockenelementes mit einem derartigen Vorsprung ist beispielsweise in der DE 10 2013 012 533 A1 beschrieben, deren Offenbarung hiermit vollumfänglich einbezogen ist. Eine Ausgestaltung eines Nockenelementes mit auf einer axialen Seitenfläche angeordneten Vorsprüngen dient vorteilhaft zu einem einfachen Herstellen einer Referenzfläche, welche mit dem zweiten Werkzeug wechselwirkt. Hierdurch wird vorteilhaft die Ausrichtung und die Positionierung des Nockenelementes auf dem Wellensegment hinsichtlich der optimierten Winkelgenauigkeit und Positionsgenauigkeit verbessert. Des Weiteren ist eine Ausgestaltung von Vorsprüngen auf einer axialen Seitenfläche des Nockenelementes als vorteilhaft anzusehen, da die Vorsprünge zum Beispiel durch Planschleifen nachbearbeitet werden können. Das bedeutet, dass demnach anstelle einer vollständigen Bearbeitung der axialen Seitenfläche lediglich die Vorsprünge nachbearbeitet werden müssen, um eine Referenzebene zu erzeugen. Hierdurch kann vorteilhaft zudem ein einfaches Herstellungsverfahren zum Herstellen des Nockenelementes gleichermaßen ermöglicht werden, wie die Optimierung bei der Positionierung des Nockenelementes auf dem Wellensegment aufgrund einer optimal ausgestalteten Referenzfläche für das zweite Werkzeug.

Es ist des Weiteren denkbar, dass nach dem Anordnen des wenigstens einen Nockenelementes in einer Vorposition ein weiteres Nockenelement auf dem Wellensegment angeordnet wird, wobei mittels des zweiten Werkzeuges beide Nockenelemente gleichzeitig entlang der Wellensegmentlängsachse in deren Endposition bewegt werden. Demnach ist es vorteilhaft möglich, dass das wenigstens eine und auch das weitere Nockenelement in einer Vorposition auf dem Wellensegment angeordnet werden, um nachfolgend in deren jeweilige Endposition bewegt zu werden. Es ist jedoch auch denkbar, dass lediglich das wenigstens eine Nockenelement in dessen Vorposition auf dem Wellensegment angeordnet wird und mittels des auf dem Wellensegment mittels des zweiten Werkzeuges aufgeschobenen weiteren Nockenelementes in eine Endposition bewegt wird, sodass das weitere Nockenelement zuvor in keine Vorposition gesetzt wurde, sondern direkt in dessen Endposition gebracht wird. Aufgrund einer Bewegung des zweiten Werkzeuges entlang der Wellensegmentlängsachse wird vorteilhaft das erste und/oder zweite Nockenelement entlang der Wellensegmentlängsachse in Richtung des ersten Werkzeuges bewegt, welches wiederum das zweite oder erste Nockenelement vor sich her schiebt und demzufolge ebenfalls in Richtung des ersten Werkzeuges entlang der Nockenwellensegmentachse bewegt. Es ist des Weiteren denkbar, dass auch mehr als zwei Nockenelemente, insbesondere drei oder mehr Nockenelemente in einer Vorposition auf dem Wellensegment angeordnet werden, wobei vorteilhaft alle vorpositionierten Nockenelemente mittels des zweiten Werkzeuges in eine Endposition bewegt werden.

Ein erfindungsgemäßes Verfahren zum Positionieren wenigstens eines Nockenelementes auf einem Wellensegment einer Nockenwelle mittels eines Montagehilfselements wird nachfolgend anhand von Zeichnungen näher erläutert. Es zeigen jeweils schematisch:
- Figur 1a: in einer seitlichen Längsschnittdarstellung eine Nockenwelle mit auf einem Wellensegment positionierten Nockenelementen und der Angabe der vom Kunden geforderten Toleranzen,
- Figur 1b: in einer seitlichen Längsschnittdarstellung eine Nockenwelle während der Positionierung eines ersten sowie eines zweiten Nockenelementes auf einem Wellensegment gemäß einem aus dem Stand der Technik bekannten Montagverfahren,
- Figur 1c: in einer seitlichen Längsschnittdarstellung die in der Figur 1b gezeigte Nockenwelle während der Positionierung eines dritten und eines vierten Nockenelementes auf dem Wellensegment mittels eines entsprechenden Werkzeuges,
- Figur 1d: in einer seitlichen Längsschnittdarstellung die in den Figuren 1b und 1c gezeigte Nockenwelle mit auf einem Wellensegment positionierten Nockenelementen und der Angabe der letztlich mittels des aus dem Stand der Technik bekannten Verfahrens erreichten Toleranzmaße,
- Figur 2a: in einer seitlichen Längsschnittdarstellung eine Nockenwelle während der Positionierung eines Nockenelementes auf einem Wellensegment mittels dem erfindungsgemäßen Verfahren,
- Figur 2b: in einer seitlichen Längsschnittdarstellung eine Nockenwelle während der Positionierung eines ersten Nockenelementes und eines zweiten Nockenelementes auf dem Wellensegment mittels des erfindungsgemäßen Verfahrens,
- Figur 2c: in einer seitlichen Längsschnittdarstellung eine Nockenwelle während des Positionierens eines dritten sowie eines vierten Nockenelementes auf dem Wellensegment,
- Figur 2d: in einer seitlichen Längsschnittdarstellung eine Nockenwelle mit angegebenen Toleranzmaßen,
- Figur 3a: in einer seitlichen Längsschnittdarstellung eine Nockenwelle während der Positionierung eines Nockenelementes mittels des erfindungsgemäßen Verfahrens,
- Figur 3b: in einer seitlichen Längsschnittdarstellung eine Nockenwelle während der Positionierung eines ersten und eines zweiten Nockenelementes mittels des erfindungsgemäßen Verfahrens,
- Figur 3c: in einer seitlichen Längsschnittdarstellung die in den Figuren 3a und 3b gezeigte Nockenwelle während der Positionierung eines dritten und eines vierten Nockenelementes auf dem Wellensegment,
- Figur 3d: in einer seitlichen Längsschnittdarstellung die in den Figuren 3a bis 3c gezeigte Nockenwelle sowie die Angabe von entsprechend erreichten Toleranzmaßen, und
- Figur 4: in einer seitlichen Längsschnittdarstellung eine Nockenwelle während der Positionierung eines Nockenelementes auf einem Wellensegment mittels des erfindungsgemäßen Verfahrens.

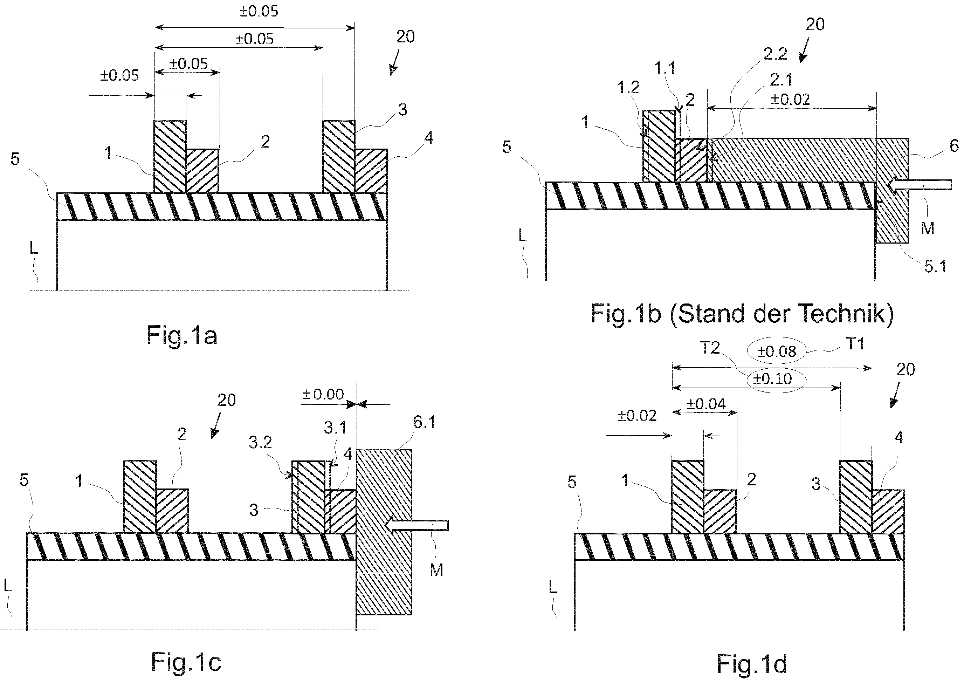

Elemente mit gleicher Funktion und Wirkungsweise sind in den Figuren 1a bis 4 jeweils mit denselben Bezugszeichen versehen.

In der Fig. 1a ist schematisch eine Längsschnittdarstellung einer Nockenwelle 20, insbesondere eines Ausschnittes einer Nockenwelle 20 gezeigt. Die Nockenwelle 20 weist ein Wellensegment 5 sowie Nockenelemente 1 bis 4 auf. Wie in der Fig. 1a gezeigt, ist die Nockenwelle 20 entlang der Wellensegmentlängsachse L halbiert dargestellt. Diese halbierte Darstellung wird auch in den nachfolgenden Figuren beibehalten. Mit dem Bezugszeichen L ist die Wellensegmentlängsachse bezeichnet, welche vorteilhaft auch als zentrische Wellensegmentlängsachse bezeichnet werden kann. Entlang der Wellensegmentachse L sind, wie in der Fig. 1a gezeigt, vier Nockenelemente 1 bis 4 auf dem Wellensegment angeordnet, wobei jeweils zwei Nockenelemente 1 und 2 bzw. 3 und 4 als Nockenelementepaar auf dem Wellensegment 5 angeordnet sind. Des Weiteren sind Toleranzmaße zwischen den einzelnen Nockenelementen 1 bis 4 aufgezeigt, welche den vom Kunden geforderten Toleranzen entsprechen. Diese Toleranzen gilt es bei der Montage der Nockenelementen 1 bis 4 auf dem Wellensegment 5 der Nockenwelle 20 zu erfüllen.

Das aus dem allgemeinen Stand der Technik bekannte Verfahren zum Positionieren wenigstens eines Nockenelementes 1 auf dem Wellensegment 5 zur Herstellung bzw. Erzeugung einer Nockenwelle 20 ist insbesondere in der Fig. 1b gezeigt. Hierzu wird ein Werkzeug 6 verwendet, welches das Nockenelement 1 bzw. ein erstes Nockenelement 1 und ein zweites Nockenelement 2 entlang der Wellensegmentlängsachse L in Montagerichtung M bewegt. Hierbei zeigt sich deutlich, dass zumindest das erste Nockenelement 1 von einer Vorposition 1.1 in eine Endposition 1.2 bewegt wird. Vergleichbares ist auch zum Nockenelement 2 zu sagen, welches sofern eine Vorpositionierung des zweiten Nockenelementes 2 stattgefunden hat, das zweite Nockenelement 2 aus einer Vorposition 2.1 in eine Endposition 2.2 bewegt wird. Das distale Ende 5.1 des Wellensegments 5 bildet dabei den Anschlag für das erste Werkzeug 6 und begrenzt folglich dessen Bewegung entlang der Wellensegmentachse L in Montagerichtung M.

Nach dem Aufbringen des ersten Nockenelementes 1 sowie des zweiten Nockenelementes 2 werden, wie aus dem allgemeinen Stand der Technik bekannt, vorteilhaft ein drittes Nockenelement 3 sowie ein viertes Nockenelement 4 auf dem Wellensegment 5 aufgebracht. Dies ist insbesondere in der Fig. 1c dargestellt. Mittels eines weiteren Werkzeuges 6.1 wird das dritte Nockenelement 3 sowie das vierte Nockenelement 4 entlang der Wellensegmentlängsachse L in der gleichen Montagerichtung M, wie zuvor das erste 1 und das zweite Nockenelement 2 bewegt wurden, verschoben. Dabei wird vorteilhaft das dritte Nockenelement 3 von einer Vorposition 3.1 in eine Endposition 3.2 aufgrund der Schubbewegung des Werkzeuges 6.1 und folglich des vierten Nockenelementes 4 in Montagerichtung M bewegt.

Wie in der Fig. 1d gezeigt, wird nach vollständiger Anordnung der Nockenelemente 1 bis 4 auf dem Wellensegment 5 zur Erzeugung einer Nockenwelle 20 aufgrund unterschiedlicher geometrischer Maße des Wellensegmentes 5 und/oder der einzelnen Nockenelemente 1 bis 4 innerhalb des vorgegebenen Toleranzbereiches, insbesondere das erste Toleranzmaß T1 bzw. der erste Toleranzbereich T1, welcher die Länge ausgehend von einer vorderen axialen Seitenfläche des ersten Nockenelementes 1 zu einer hinteren axialen Seitenfläche des dritten Nockenelementes 3 beschreibt, sowie auch das zweite Toleranzmaß T2 bzw. der zweite Toleranzbereich T2, welcher die Länge ausgehend von einer vorderen axialen Seitenfläche des ersten Nockenelementes 1 zu einer vorderen axialen Seitenfläche des dritten Nockenelementes 3 beschreibt, nicht eingehalten. Die erreichten Toleranzmaße T1 und T2 überschreiten deutlich die in der Fig. 1a gezeigten vom Kunden geforderten Toleranzmaße. Eine Anpassung des Toleranzmaßes T2 ist vorteilhaft mittels einer Bearbeitung des dritten Nockenelementes 3 möglich, indem beispielsweise die Breite des dritten Nockenelementes 3 durch ein Abschleifen einer der Seitenfläche des dritten Nockenelementes 3 verringert wird. Eine derartige Bearbeitung ist jedoch nicht realisierbar, um das Toleranzmaß T1 anzupassen, da eine Bearbeitung der hinteren axialen Seitenfläche des dritten Nockenelementes 3 aufgrund der Anordnung des vierten Nockenelementes 4 nicht ermöglicht werden kann. Folglich ist es erforderlich den gesamten Montageprozess zu optimieren, um die vom Kunden geforderten (Abstands-)Toleranzen einzuhalten.

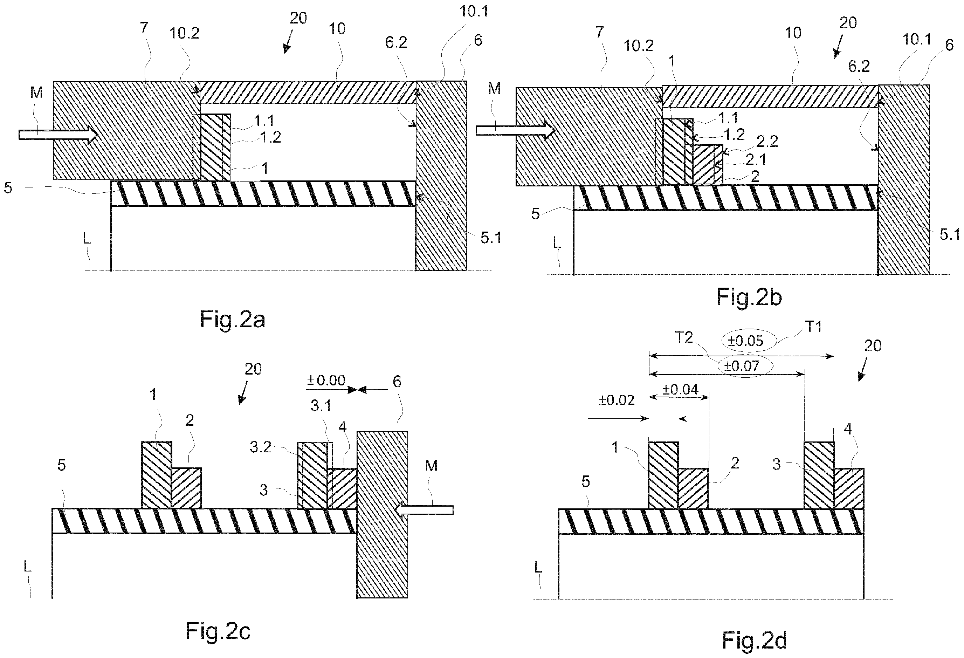

Das hierfür beanspruchte Verfahren zum Positionieren wenigstens eines Nockenelementes 1 auf dem Wellensegment 5 wird in den Fig. 2a bis 4 aufgezeigt. So ist in der Fig. 2a in einer seitlichen Schnittdarstellung eine (halbierte) Nockenwelle 20 gezeigt, die ein (halbiertes) Wellensegment 5 sowie ein auf dem Wellensegment 5 anzuordnendes (halbiertes) erstes Nockenelement 1 aufweist. Das Nockenelement 1 wird mittels eines zweiten Werkzeuges 7 entlang der Wellensegmentlängsachse L in Montagerichtung M von einer Vorposition 1.1 in eine Endposition 1.2 in Richtung des ersten Werkzeuges 6 verschoben. Das erste Werkzeug 6 dient zum Anordnen des Wellensegmentes 5 derart, dass das erste distale Ende 5.1 des Wellensegmentes 5 bündig an einer Werkzeugoberfläche 6.2 des ersten Werkzeuges anliegt, welche dem Wellensegment 5 zugerichtet ist. Des Weiteren ist in der Fig. 2a ein Montagehilfselement 10 gezeigt, welches beispielsweise in Gestalt einer Montagehülse ausgestaltet ist. Das Montagehilfselement 10 erstreckt sich entlang der Wellensegmentlängsachse L ausgehend von der Werkzeugoberfläche 6.2 in Richtung des zweiten Werkzeuges 7. Das Montagehilfselement 10 dient vorteilhaft als Anschlagselement für das zweite Werkzeug 7. Eine Bewegung des zweiten Werkzeuges 7 in Montagerichtung M entlang der Wellensegmentlängsachse L wird mittels des Montagehilfselementes 10, insbesondere einer (zweiten) distalen Wandung 10.2 des Montagehilfselementes 10, welche einer ersten distalen Wandung 10.1 des Montagehilfselementes 10 gegenüber liegt, begrenzt. Die erste distale Wandung 10.1 des Montagehilfselementes 10 kontaktiert vorteilhaft die Werkzeugoberfläche 6.2 des ersten Werkzeuges 6.

Wie in der Fig. 2b gezeigt, ist es auch denkbar, dass nicht nur ein Nockenelement 1, sondern auch zwei Nockenelemente 1 und 2 gleichzeitig aus einer Vorposition 1.1 bzw. 2.1 in eine Endposition 1.2 bzw. 2.2 mittels eines zweiten Werkzeuges 7 bewegt werden können. Hierfür wird zuerst ein erstes Nockenelement 1 und darauffolgend ein zweites Nockenelement 2 oder anders herum auf dem Wellensegment 5 in einer Vorposition 1.1 bzw. 2.1 angeordnet. Darauffolgend wird das zweite Werkzeug 7 in Montagerichtung M entlang der Wellensegmentlängsachse L bewegt und verschiebt gleichzeitig das erste Nockenelement 1 sowie das zweite Nockenelement 2 in eine Endposition 1.2 bzw. 2.2. Der Verschiebeweg wird durch das Montagehilfselement 10 begrenzt, welches als Anschlagselement für das zweite Werkzeug 7 dient. Im Vergleich zu dem aus dem allgemeinen Stand der Technik bekannten Verfahren, wie in den Fig. 1b bis 1c gezeigt, wird mittels des erfindungsgemäßen Verfahrens nicht mit der axialen Rückseite des Nockenelementes 1 direkt auf einen Anschlag verfahren, vielmehr wird das Nockenelement 1 an dessen axialer Vorderseite mit einem Werkzeug 7, wie beispielsweise einem Ambos soweit bewegt, bis dieses Werkzeug 7 auf das Montagehilfselement 10, wie beispielsweise die Montagehülse aufschlägt, welche demzufolge einen Anschlag bildet.

Nach dem Positionieren des wenigstens ersten Nockenelementes 1, kann, wie in der Fig. 2c gezeigt, ein drittes 3 und ein viertes Nockenelement 4 auf dem Wellensegment 5 angeordnet werden. Dafür wird das erste Werkzeug 6 kurzzeitig von dem Wellensegment 5 entfernt, wenigstens das dritte Nockenelement 3 und vorteilhaft auch das vierte Nockenelement 4 auf das Wellensegment 5 in eine Vorposition aufgeschoben und das erste Werkzeug 6 in Montagerichtung M derart bewegt, dass zumindest das dritte Nockenelement 3 von einer Vorposition 3.1 in eine Endposition 3.3 bewegt wird.

Es wäre jedoch auch denkbar, dass zuerst das vierte Nockenelement 4 auf das Wellensegment 5 derart aufgebracht wird, dass dieses das erste Werkzeug 6 kontaktiert. Nachfolgend wird dann vorteilhaft das dritte Nockenelement 3 auf das Wellensegment 5 derart weit aufgeschoben, bis dieses das vierte Nockenelement 4 kontaktiert. Demnach befinden sich beide Nockenelemente 3 und 4 nach deren Montage auf dem Wellensegment 5 bereits in deren Endposition. Das erste Werkzeug 6 dient demnach als Anschlagselement für das vierte Nockenelement 4, welches wiederum als Anschlagselement für das dritte Nockenelement 3 dient. Das zweite Nockenelement 2 wird darauffolgend auf das Wellensegment 5 in eine Vorposition geschoben. Die Vorposition ergibt sich, da kein Werkzeug oder anderes Element als Anschlagselement für das zweite Nockenelement 2 dient und folglich dessen Position, insbesondere Endposition auf dem Wellensegment bestimmt. Nach dem Aufbringen des zweiten Nockenelementes 2 wird das erste Nockenelement 1 auf das Wellensegment 5 aufgebracht. Dazu dient vorteilhaft das zweite Werkzeug 7, welches das erste Nockenelement 1 entlang der Wellensegmentlängsachse L in Richtung des ersten Werkzeuges 6 verschiebt. Aufgrund der Verschiebung des ersten Nockenelementes 1 wird auch das zweite Nockenelement 2 entlang der Wellensegmentlängsachse L in Richtung des ersten Werkzeuges 6 von einer Vorposition in ein Endposition verschoben. Dies geschieht aufgrund der Kontaktierung des ersten Nockenelementes 1 mit dem bereits vorpositionierten zweiten Nockenelement 2 während des Montageprozesses des ersten Nockenelementes 1 auf dem Wellensegment 5. Die beiden Nockenelemente 1 und 2 werden soweit verschoben bzw. bewegt bis das zweite Werkzeug 7 das Montagehilfselement 10 kontaktiert, wodurch wiederum die Bewegung des zweiten Werkzeuges 7 begrenzt ist.

Wie in der Fig. 2d gezeigt, ermöglicht das erfindungsgemäße Verfahren die Einhaltung des vom Kunden vorgegebenen Toleranzbereiches T1 und optimiert zumindest den Toleranzbereich T2 im Vergleich zu der Verwendung des aus dem allgemein bekannten Stand der Technik bekannten Verfahrens. Zudem ist auch weiterhin zur Erreichung des vorgegebenen Toleranzbereiches T2 eine Bearbeitung des dritten Nockenelementes 3 denkbar.

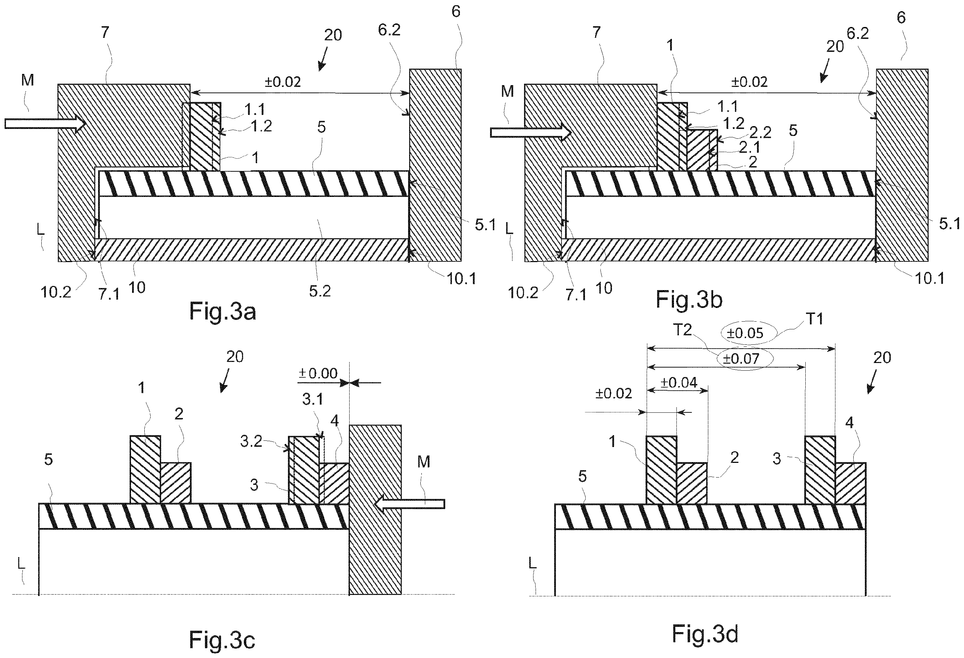

In den Fig. 3a bis 3d ist ebenfalls schematisch das erfindungsgemäße Verfahren dargestellt, wobei das Montagehilfselement 10 nicht, wie in den Fig. 2a bis 2d dargestellt, eine Montagehülse, sondern ein Montagedorn ist. Der Montagedorn erstreckt sich dabei durch eine Durchgangsbohrung 5.2 des Wellensegmentes 5. Das erste distale Ende 5.1 ist dabei wieder bündig mit der Werkzeugoberfläche 6.2 des ersten Werkzeuges 6 angeordnet, sodass ein definierter Abstand zwischen dem ersten Werkzeug 6 und dem zweiten Werkzeug 7 erzeugt wird, um eine Bewegung des zweiten Werkzeuges zu begrenzen, wenn das zweite Werkzeug 7 in Montagerichtung M entlang der Wellensegmentlängsachse L in Richtung des ersten Werkzeuges 6 bewegt wird. Das Montagehilfselement 10, welches folglich in Form eines Montagedorns ausgestaltet ist, dient demnach als Anschlag für das zweite Werkzeug 7. Die Bewegung des zweiten Werkzeuges 7 in Montagerichtung M wird gestoppt, sobald eine Oberfläche 7.1 des zweiten Werkzeuges 7 das zweite distale Ende 10.2 des Montagehilfselementes 10 kontaktiert. Vergleichbares gilt hinsichtlich dessen in der Fig. 3b gezeigten Verfahren zum Positionieren eines Nockenelementes 1, bei welchem wenigstens zwei Nockenelemente 1 bzw. 2 ausgehend von einer Vorposition 1.2 bzw. 2.1 in eine Endposition 1.2 bzw. 2.2 in Montagerichtung M bewegt werden.

In der Fig. 3c ist vergleichbar zu der Fig. 2c die Positionierung weiterer Nockenelemente 3 und 4 auf dem Wellensegment 5 gezeigt. Demzufolge wird hierbei auf die Beschreibung zur Fig. 2c verwiesen. In der Fig. 3d ist die Endpositionierung der Nockenelemente 1 bis 4 auf dem Wellensegment 5 zur Erzeugung der fertigen Nockenwelle 20 gezeigt. Entsprechend zu der in Fig. 2d gezeigten Nockenwelle 20, wird auch hier deutlich, dass insbesondere das Toleranzmaß T1 bzw. der Toleranzbereich T1 mittels des erfindungsgemäßen Verfahrens eingehalten wird, während das Toleranzmaß T2 bzw. der Toleranzbereich T2 beispielsweise mittels eines Bearbeitungsverfahrens durch ein Bearbeiten des dritten Nockenelementes 3 optimierbar ist.

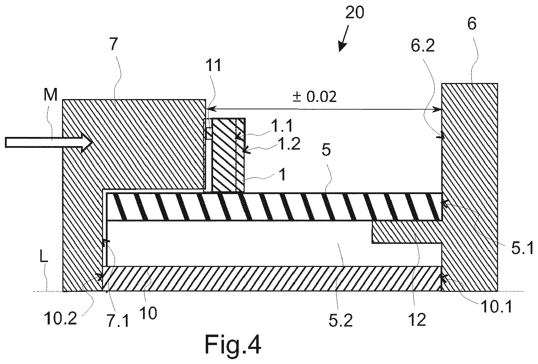

In der Fig. 4 ist das in den Fig. 2a bis 2c bzw. 3a bis 3d gezeigte erfindungsgemäße Verfahren dargestellt, wobei als Montagehilfselement 10 ein Montagedorn verwendet wird. Jedoch ist es auch denkbar als Montagehilfselement 10 eine Montagehülse zu verwenden. Vergleichbar zu den Fig. 2a bzw. 3a wird ein erstes Nockenelement 1 ausgehend von einer Vorposition 1.1 in eine Endposition 1.2 nach dem Anordnen auf einem Wellensegment 5 bewegt, wobei ein zweites Werkzeug 7 in Montagerichtung M entlang einer Wellensegmentlängsachse L in Richtung des ersten Werkzeuges 6 verfahren wird. Das erste Nockenelement 1 weist zudem wenigstens einen Vorsprung 11 auf, der sich ausgehend von einer axialen Seitenwandung, insbesondere der vorderen axialen Seitenwandung weg erstreckt. Der Vorsprung 11 selbst dient vorteilhaft zur Erzeugung einer Referenzfläche. Dabei ist vorteilhaft davon auszugehen, dass das Nockenelement 1 mehr als einen Vorsprung 11 vorteilhaft zwei und besonders vorteilhaft drei Vorsprünge 11 aufweist, welche gleichmäßig beabstandet zueinander an der axialen Seitenfläche des Nockenelementes 1 angeordnet sind.

Es ist des Weiteren denkbar, dass das erste Werkzeug 6 einen Innenspanndorn 12 aufweist, welcher sich ausgehend von der Oberfläche 6.1 des ersten Werkzeuges 6, welche dem Wellensegment 5 zugerichtet ist, zumindest abschnittsweise entlang der Wellensegmentlängsachse L innerhalb der Bohrung des Wellensegmentes 5 erstreckt. Dieser Innenspanndorn dient vorteilhaft zur Positionierung und/oder Arretierung des Wellensegmentes 5 an dem ersten Werkzeug 6, sodass eine ungewollte Bewegung des Wellensegmentes 5 beim Anordnen und Positionieren des wenigstens ersten Nockenelementes 1 vermieden wird.

Die in den Fig. 2a bis 4 gezeigten Ausführungsbeispiele bedingen nicht das Erfordernis der Vollständigkeit und sind nur als beispielhaft anzusehen. Die Ausgestaltung der einzelnen Werkzeuge, des Wellensegmentes und/oder der Nockenelemente sowie des Montagehilfselementes ist lediglich schematisch betrachtet und bedingt keine Vollständigkeit.

### Bezugszeichenliste

- 1: (erstes) Nockenelement
- 1.1: Vorposition des (ersten) Nockenelementes
- 1.2: Endposition des (ersten) Nockenelementes
- 2: (zweites) Nockenelement
- 2.1: Vorposition des (zweiten) Nockenelementes
- 2.2: Endposition des (zweiten) Nockenelementes
- 3: (drittes) Nockenelement
- 3.1: Vorposition des (dritten) Nockenelementes
- 3.2: Endposition des (dritten) Nockenelementes
- 4: (viertes) Nockenelement
- 5: Wellensegment
- 5.1: erstes distales Wellensegmentende
- 5.2: Durchgangsbohrung
- 6: erstes Werkzeug
- 6.1: weiteres Werkzeug
- 6.2: Werkzeugoberfläche des ersten Werkzeuges
- 7: zweites Werkzeug
- 7.1: Oberfläche des zweiten Werkzeuges
- 10: Montagehilfselement
- 10.1: erstes distales Ende des Montagehilfselementes
- 10.2: zweites distales Ende des Montagehilfselementes
- 11: Vorsprung
- 12: Innenspanndorn

- 20: Nockenwelle

- L: Wellensegmentlängsachse
- M: Montagerichtung
- T1: (erstes) Toleranzmaß
- T2: (zweites) Toleranzmaß

## Patentansprüche

1. Verfahren zum Positionieren wenigstens eines Nockenelementes (1, 2) auf einem Wellensegment (5) einer Nockenwelle (20) mittels eines Montagehilfselementes (10), wobei das Verfahren zumindest die folgenden Schritte aufweist:
- Anordnen des Wellensegmentes (5) derart relativ zu einem ersten Werkzeug (6), dass ein erstes distales Wellensegmentende (5.1) des Wellensegmentes (5) bündig an einer dem Wellensegment (5) zugerichteten Werkzeugoberfläche (6.2) des Werkzeuges (6) anliegt
- Anordnen des Nockenelementes (1, 2) auf dem Wellensegment (5) in einer Vorposition (1.1, 2.1),
- Anordnen des Montagehilfselementes (10), wobei ein erstes distales Ende (10.1) des Montagehilfselementes (10) die dem Wellensegment (5) zugerichtete Werkzeugoberfläche (6.2) des ersten Werkzeuges (6) derart kontaktiert, dass das Montagehilfselement (10) längs einer Wellenseg- mentlängsachse (L) einen definierten Abstand zum ersten Werkzeug (6) bildet, und
- Bewegen eines zweiten Werkzeuges (7) zumindest abschnittsweise entlang der Wellensegment- längsachse (L) soweit bis das zweite Werkzeug (7) ein zweites distales Ende (10.2) des Montagehilfselementes (10) kontaktiert, und Verschieben des Nockenelementes (1 , 2) mittels des zweiten Werkzeuges (7) von der Vorposition (1.1, 2.1) auf eine Endposition (1.2, 2.2).

2. Verfahren gemäß Anspruch 1, **dadurch gekennzeichnet, dass** als Montagehilfselement (10) eine Montagehülse verwendet wird.

3. Verfahren gemäß Anspruch 1, **dadurch gekennzeichnet, dass** als Montagehilfselement (10) ein Montagedorn verwendet wird .

4. Verfahren gemäß wenigstens einem der vorangegangenen Ansprüche, **dadurch gekennzeichnet, dass** mittels des ersten Werkzeuges (6) das Wellensegment (5) in einer Bearbeitungsposition ausgerichtet wird .

5. Verfahren gemäß wenigstens einem der vorangegangenen Ansprüche, **dadurch gekennzeichnet, dass** als erstes Werkzeug (6) ein Spannfutter, insbesondere ein Maschinenfutter einer Montageanlage verwendet wird .

6. Verfahren gemäß wenigstens einem der vorangegangenen Ansprüche, **dadurch gekennzeichnet, dass** das erstes Werkzeug (6) einen Innenspanndorn (12) aufweist, mittels welchem das erste Werkzeug (6) das Wellensegment (5) in einer definierten Position arretiert.

7. Verfahren gemäß wenigstens einem der vorangegangenen Ansprüche, **dadurch gekennzeichnet, dass** als zweites Werkzeug (7) ein Greifelement, insbesondere ein Montagegreifer verwendet wird.

8. Verfahren gemäß Anspruch 7, **dadurch gekennzeichnet, dass** das Nockenelement (1, 2) mittels des Montagegreifers an dem Wellensegment (5) angeordnet wird, wobei die Position des Nockenelementes (1, 2) innerhalb des Montagegreifers über wenigstens einen an einer axialen Seitenfläche des Nockenelementes (1 , 2) ausgebildeten Vorsprunges (11) festgelegt wird .

9. Verfahren gemäß wenigstens einem der vorangegangenen Ansprüche, **dadurch gekennzeichnet, dass** nach dem Anordnen des wenigstens einen Nockenelementes (2) in einer Vorposition (2.1) ein weiteres Nockenelement (1) auf dem Wellensegment angeordnet wird, wobei mittels des zweiten Werkzeuges (7) beide Nockenelemente (1, 2) gleichzeitig entlang der Wellensegmentlängsachse (L) in deren Endposition (1.2, 2.2) bewegt werden.

## Claims

1. Method for positioning at least one cam element (1, 2) on a shaft segment (5) of a camshaft (20) by means of assembly aid element (10), wherein the method comprises at least the following steps:
- arranging the shaft segment (5) relative to a first tool (6) in such a way that a first distal end (5.1) of the shaft segment (5) lies flush against a surface (6.2) of the tool (6) which is directed towards the shaft segment (5),
- arranging the cam element (1, 2) on the shaft segment (5) in a pre-position (1.1, 2.1),
- arranging the assembly aid element (10), wherein a first distal end (10.1) of the assembly aid element (10) contacts the surface (6.2) of the first tool (6), which is directed towards the shaft segment (5), in such a way that the assembly aid element (10) forms a defined distance to the first tool (6) along a shaft-segment longitudinal axis (L), and
- moving a second tool (7) at least in sections along the shaft-segment longitudinal axis (L) until the second tool (7) contacts a second distal end (10.2) of the assembly aid element (10), and pushing the cam element (1, 2) by means of the second tool (7) from the pre-position (1.1, 2.1) to a final position (1.2, 2.2).

2. Method according to Claim 1, **characterized in that** an assembly sleeve is used as the assembly aid element (10).

3. Method according to Claim 1, **characterized in that** an assembly mandrel is used as the assembly aid element (10).

4. Method according to at least one of the preceding claims, **characterized in that** the shaft segment (5) is aligned in a machining position by means of the first tool (6).

5. Method according to at least one of the preceding claims, **characterized in that** a chuck, especially a machine chuck of an assembly plant, is used as the first tool (6).

6. Method according to at least one of the preceding claims, **characterized in that** the first tool (6) comprises an internal arbor (12), by means of which the first tool (6) locks the shaft segment (5) in a defined position.

7. Method according to at least one of the preceding claims, **characterized in that** a gripper element, especially an assembly gripper, is used as the second tool (7).

8. Method according to Claim 7, **characterized in that** the cam element (1, 2) is arranged on the shaft segment (5) by means of the assembly gripper, wherein the position of the cam element (1, 2) inside the assembly gripper is fixed via at least one projection (11) which is formed on an axial lateral face of the cam element (1, 2).

9. Method according to at least one of the preceding claims, **characterized in that** after the arranging of the at least one cam element (2) in a pre-position (2.1) a further cam element (1) is arranged on the shaft segment, wherein by means of the second tool (7) both cam elements (1, 2) are moved along the shaft-segment longitudinal axis (L) into their final position (1.2, 2.2) at the same time.

## Revendications

1. Procédé de positionnement d'au moins un élément de came (1, 2) sur un segment d'arbre (5) d'un arbre à cames (20) au moyen d'un élément de montage auxiliaire (10), le procédé comprenant au moins les étapes suivantes :
- disposer le segment d'arbre (5) par rapport à un premier outil (6) de sorte qu'une première extrémité distale (5.1) du segment d'arbre (5) affleure une surface (6.2) de l'outil (6) qui est dirigée vers le segment d'arbre (5),
- disposer l'élément de came (1, 2) sur le segment d'arbre (5) à une position initiale (1.1, 2.1),
- disposer l'élément de montage auxiliaire (10), une première extrémité distale (10.1) de l'élément de montage auxiliaire (10) venant en contact avec la surface (6.2) du premier outil (6) qui est dirigée vers le segment d'arbre (5) de telle sorte que l'élément de montage auxiliaire (10) forme une distance définie au premier outil (6) le long d'un axe longitudinal (L) du segment d'arbre, et
- déplacer un deuxième outil (7) au moins en partie le long de l'axe longitudinal (L) du segment d'arbre jusqu'à ce que le deuxième outil (7) vienne en contact avec une deuxième extrémité distale (10.2) de l'élément de montage auxiliaire (10) et faire coulisser l'élément de came (1, 2) au moyen du second outil (7) de la position initiale (1.1, 2.1) à une position finale (1.2, 2.2).

2. Procédé selon la revendication 1, **caractérisé en ce qu'**un manchon de montage est utilisé comme élément de montage auxiliaire (10).

3. Procédé selon la revendication 1, **caractérisé en ce qu'**un mandrin de montage est utilisé comme élément de montage auxiliaire (10).

4. Procédé selon l'une au moins des revendications précédentes, **caractérisé en ce que** le segment d'arbre (5) est orienté dans une position d'usinage au moyen du premier outil (6).

5. Procédé selon l'une au moins des revendications précédentes, **caractérisé en ce qu'**un mandrin de serrage, en particulier un mandrin de machine d'une installation de montage est utilisé comme premier outil (6) .

6. Procédé selon au moins l'une des revendications précédentes, **caractérisé en ce que** le premier outil (6) comporte un mandrin de serrage intérieur (12) au moyen duquel le premier outil (6) bloque le segment d'arbre (5) dans une position définie.

7. Procédé selon l'une au moins des revendications précédentes, **caractérisé en ce qu'**un élément de préhension, en particulier une pince de montage, est utilisé comme deuxième outil (7).

8. Procédé selon la revendication 7, **caractérisé en ce que** l'élément de came (1, 2) est disposé sur le segment d'arbre (5) au moyen de la pince de montage, la position de l'élément de came (1, 2) à l'intérieur de la pince de montage étant fixée par au moins une saillie (11) formée sur une surface latérale axiale de l'élément de came (1, 2).

9. Procédé selon l'une au moins des revendications précédentes, **caractérisé en ce que**, après avoir disposé l'au moins un élément de came (2) dans une position initiale (2.1), un autre élément de came (1) est disposé sur le segment d'arbre, au moyen du deuxième outil (7) les deux éléments de came (1, 2) étant déplacés simultanément dans leur position finale (1.2, 2.2) le long de l'axe longitudinal (L) du segment d'arbre.
